# EUROPÄISCHE PATENTSCHRIFT

(11) **EP 0 496 339 B1**
(45) Veröffentlichungstag und Bekanntmachung des Hinweises auf die Patenterteilung: **07.06.1995**
(21) Anmeldenummer: 92100897.5
(22) Anmeldetag: 21.01.1992
(51) Int. Cl.: B23K 11/24

(54) **Schweisssteuerung für Vielpunktschweissanlagen**
Welding control of a multi-point welding system
Commande de soudage d'un dispositif de soudage multi-points

(30) Priorität: 22.01.1991 DE 4101648
(43) Veröffentlichungstag der Anmeldung: 29.07.1992
(73) Patentinhaber: ROBERT BOSCH GMBH, 70442 Stuttgart (DE)
(72) Erfinder: Arndt, Volker, Dipl.-Ing., W-6120 Erbach (DE); Stellwag, Dieter, W-6120 Erbach (DE)

(56) Entgegenhaltungen:
- US-A- 4 465 918
- US-A- 4 493 040
- US-A- 4 851 635
- PATENT ABSTRACTS OF JAPAN vol. 8, no. 148 (M-308)(1585) 11. Juli 1984 & JP-A-59 045 086 (TOKYO SHIBAURA DENKI K.K.) 13 März 1984

## Beschreibung

Die Erfindung geht aus von einem Verfahren zur Steuerung des Stromes in einer Widerstandsschweißanordnung. In der Schrift DVS Berichte, Band 96, 1900, Seiten 57 bis 61. wird eine Schweißsteuerung beschrieben, welche nach dem Prinzip der Konstantstromregelung arbeitet. Hierzu wird an der Sekundärseite einer jeden Schweißstelle der effektive Schweißstrom bzw. die effektive Schweißspannung gemessen und aufgrund des so ermittelten Wertes die Primärspannung gesteuert. Die Verstellung der primärseitigen Spannung erfolgt durch eine Phasenanschnittsteuerung. Effektivwertbildung und Steuerung der primärseitigen Spannung werden an jedem Schweißtransformator separat durchgeführt.

Aus der technischen Information zu der Steuerstufe D 35.01 DYD der Firma Bosch ist eine Schweißsteuerung bekannt, welche dem Schweißstrom mittels Spannungs- oder Stromregelung kontrolliert. Die Regelung kann wahlweise primär- oder sekundärseitig angeordnet sein. Gemessen werden die Effektivspannung bzw. der Effektivstrom, welche während der Stromzeit konstant gehalten werden. Dadurch ist eine teilweise Kompensation der Netzspannungsschwankungen in Bezug auf das Schweißergebnis möglich. Wird während einer Schweißung ein minimaler oder maximaler Phasenanschnittswinkel erreicht, wird dies angezeigt.

Aus der US-PS 4 851 635 ist ein Schweißsteuerverfahren bekannt, welches auf der Bestimmung des Leistungsfaktors für die Schweißanordnung beruht. Der Leistungsfaktor beschreibt dabei das Verhältnis des in der Schweißanordnung auftretenden gesamten induktiven Widerstandes zum gesamten realen Widerstand. Er wird ermittelt, indem zum einen die Phasennacheilung des Schweißstromes gegenüber der Schweißspannung und zum anderen die Schweißstromzeit bis zum Einsetzen der Phasennacheilung bestimmt werden. Ist der Leistungsfaktor bekannt, ergibt sich unter Berücksichtigung des gewünschten Schweißstromes der Phasenanschnittwinkel. Exakte Werte für den Phasenanschnittwinkel werden allerdings nur erhalten, wenn bestimmte komplexe Gleichungen gelöst werden. Hierfür ist eine entsprechend leistungsfähige, und damit kostenintensive Recheneinrichtung erforderlich.

Aus der US 4 493040 ist ein Schweißsteuerverfahren bekannt, welches mit Hilfe von Leistungsfaktorkorrekturkurven arbeitet. Diese ordnen jedem gewünschten Schweißstrom bei gegebener Phasennacheilung einen Phasenanschnittwinkel zu. Die Phasennacheilung, welche hierzu bestimmt wird, ist in mehrere Bereiche unterteilt. Jedem Bereich ist eine spezifische Leistungsfaktorkorrekturkurve zugeordnet. Das Verfahren sieht ferner bei gegebenem Phasenanschnittwinkel vor Zündung des Stromventils eine Prüfung daraufhin vor, ob das Stromventil zündungsbereit ist. Eine Zündung erfolgt nur, wenn die vorhergehende Stromhalbwelle abgeschlossen ist. Das Verfahren setzt eine vorhergehende Ermittlung der Leistungsfaktorkorrekturkurven und die Bereitstellung entsprechender Speichermittel voraus.

Mit Ausnahme des Zuerstgenannten sind alle diese bekannten Systeme für Mehrpunktanlagen, bei denen mehrere Schweißtransformatoren von einem gemeinsamen Versorgungskreis gespeist werden, nur bedingt geeignet. In Vielpunktanlagen ist die Stromverteilung auf die einzelnen Schweißzangen im allgemeinen nicht genau bekannt. Sie unterliegt Schwankungen, die beispielsweise von der Art der geschweißten Bleche oder dem Zustand der Schweißelektroden abhängen. Da Vielpunktanlagen mit gemeinsamen Primärkreis einer Parallelschaltung mehrerer Schweißstellen entsprechen, weisen sie eine hohe Induktivität auf. Störungen an einer einzelnen Schweißzange können deshalb die übrigen Schweißkreise selbst dann erheblich beeinflussen, wenn primärseitig der Schweißstrom oder der Leistungsfaktor konstant gehalten werden. Derartige gegenseitige Beeinflussungen sind nicht erwünscht.

Aufgabe der Erfindung ist es, ein Verfahren zur Steuerung einer Widerstandsschweißanordnung anzugeben, welches für alle Schweißpunkte eine gleichbleibende Qualität liefert.

### Vorteile der Erfindung

Ein Steuerverfahren mit den Merkmalen des Hauptanspruchs ist besonders geeignet für Vielpunktschweißanlagen. Von Vorteil ist, daß die gesamte Steuerung an der Primärseite der Schweißanlage erfolgen kann. Vorhandene Anlagen können leicht mit der erfindungsgemäßen Steuerung nachgerüstet werden. Grundlegende Eingriffe in die Struktur einer bestehenden Anlage sind nicht erforderlich.

Das erfindungsgemäße Verfahren hat den Vorteil, daß der Schweißstrom jederzeit regelbar ist. Dadurch kann immer die bestmögliche Schweißqualität erzielt werden.

Vorteilhafte Weiterbildungen des erfindungsgemäßen Verfahrens ergeben sich aus den in den Unteransprüchen beschriebenen Maßnahmen.

Zweckmäßig wird die Erfassung der Phasennacheilung des Stromes als Zeitmessung, beginnend mit dem Nulldurchgang der Primärspannung und endend mit dem Nulldurchgang des Primärstromes durchgeführt.

Die Festlegung des Phasenanschnittwinkels erfolgt in vorteilhafter Weise so, daß die Spannungs-Zeitfläche in jeder Halbwelle einen konstanten Wert annimmt.

Vorteilhaft ist ferner, schon während der Zeit der Berechnung des Zündwinkels eine periodische Anfrage vorzusehen, welche prüft, ob bereits während der Erfassungsdauer ein Zündinterrupt erzeugt wird.

Das erfindungsgemäße Verfahren wird anhand einer Zeichnung dargestellt und in der nachfolgenden Beschreibung näher erläutert.

### Zeichnung

Es zeigen Figur 1 ein Strukturbild einer Vielpunktschweißanlage, Figur 2 ein Strukturbild einer erfindungsgemäßen Schweißsteuerung, Figur 3 eine Darstellung eines idealisierten typischen Verlaufes von Schweißspannung bzw. Schweißstrom.

### Beschreibung des Ausführungsbeispiels

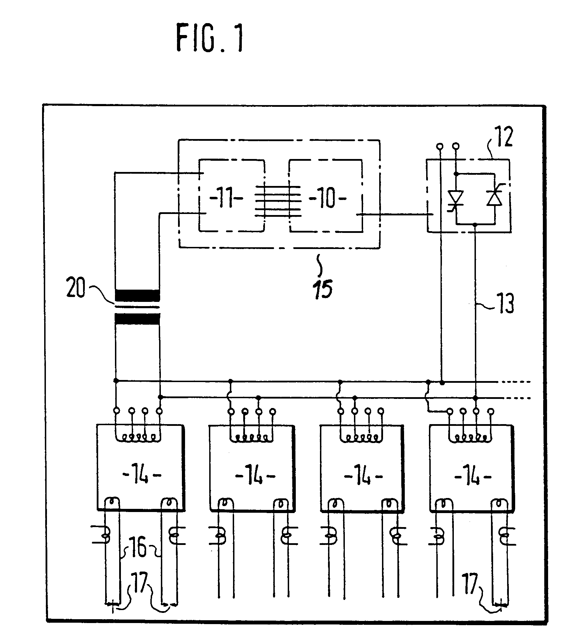

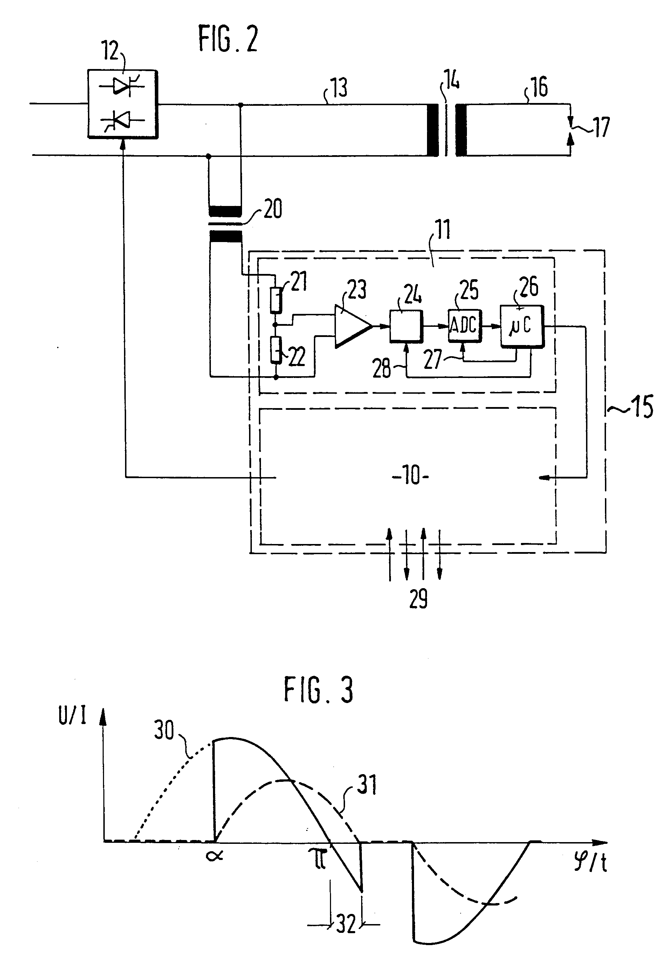

Die in Figur 1 schematisch dargestellte Vielpunktschweißanlage enthält ein Leistungsteil 12, mehrere Schweißtransformatoren 14, denen jeweils die Schweißzangen 17 zugeordnet sind, sowie einen aus einem Meßtrafo 20, einer Spannungsregelung 11 und der Schweißsteuerung 10 bestehenden Steuerungsteil auf. Das Leistungsteil 12 besteht in einfacher Weise aus einem Paar antiparallel geschalteter Thyristoren, die als ein Block in einem Zweig des Primärkreises 13 angeordnet sind. Geeignet sind jedoch auch andere Bauelemente mit Stromventilfunktion, welche eine von außen steuerbare Verstellung der über den Primärkreis zugeführten Energie erlauben. Die Energieverstellung erfolgt in Form einer Strom- bzw. Spannungsbeeinflussung durch Veränderung des Phasenanschnitts der Spannungshalbwellen. Hierzu wird bei Verwendung von Thyristoren der jeweils in Durchlaßrichtung liegende Thyristor zu einem gewünschten Spannungs-Phasenwinkel gezündet. Der Phasenanschnittswinkel wird im folgenden mit Zündwinkel α bezeichnet. Die Ansteuerung des Leistungsteiles 12 erfolgt durch eine Steuerungseinheit 15, welche zum Zwecke einer einfacheren Beschreibung in zwei Blöcken dargestellt ist. Der erste Block beinhaltet die eigentliche Schweißsteuerung 10. Kernstück der Schweißsteuerung 10 ist ein Mikrocomputer. Mit diesem berechnet sie jeweils den Zündwinkel α und liefert Zündimpulse an das Leistungsteil 12. Der zweite Block beinhaltet eine Spannungsregelung 11. Diese ist der Schweißsteuerung 10 vorgelagert, ihr wird über einen Meßtransformator 20 das Signal der Spannung im Primärkreis 13 zugeführt. Leistungsteil 12, Meßtransformator 20, sowie die Blöcke 10 und 11 bilden einen Regelkreis, mittels dessen die Schweißleistung im Sekundärkreis 16 an den Schweißzangen 17, von denen beispielhaft nur einige dargestellt sind, gesteuert wird. Die Steuerung 15 sowie das ihr zugrundeliegende Verfahren werden im folgenden anhand der Figuren 2 und 3 näher erläutert.

In Figur 2 sind nochmals die Elemente des Schweißkreises, Leistungsteil 12, Schweißtransformator 14, Schweißzange 17, sowie die Elemente des Steuerungsteils, Meßtransformator 20, Spannungsregelung 11 und Schweißsteuerung 10 wiedergegeben. Die im Primärkreis 13 anliegende Spannung wird über den Meßtransformator 20, welcher zur Potentialtrennung dient, einem aus zwei Widerständen 21 und 22 bestehenden Spannungsteiler zugeführt. Das über den Widerstand 22 abgegriffene Spannungssignal wird in einem Verstärker 23 verstärkt und einer "Sample/Hold"-Stufe 24 zugeführt. Der Sample/Hold-Stufe 24 nachgeschaltet ist ein Analog-Digitalwandler 25, dessen Ausgangssignal einem Mikroprozessor 26 zugeführt wird. Der Mikroprozessor 26 steuert über Datenleitungen 27 und 28 die Sample/Hold-Stufe 24 und den Analog-Digitalwandler 25. Das Ausgangssignal des Mikroprozessors 26 wird der Schweißsteuerung 10 zugeführt. Die Steuerung 10 kommuniziert über Datenleitungen 29 mit weiteren peripheren Geräten, wie zum Beispiel die Bedienungselemente.

Die Schweißsteuerung 10 steuert die Thyristoren im Leistungsteil 12 phasenabhängig an. Einen dabei entstehenden möglichen, idealisierten Verlauf 30 der Spannung im Primärkreis 13 zeigt beispielhaft Figur 3. Der in Durchlaßrichtung geschaltete Thyristor wird bei einem in der Steuerung 10 berechneten Phasenwinkel, dem Zündwinkel α , gezündet.

Der jeweils angesteuerte Thyristor bleibt durchgeschaltet, bis die Spannung 30 den Wert Null erreicht. Die Spannung 30 treibt im Sekundärkreis 16 mit den Schweißzangen 17 einen Strom, der sich auf der Primärseite in einem Strom I mit der idealisierten Form der Kurve 31 ausdrückt. Der Strom I 31 ist gegenüber der Spannung 30 um einen Winkel ψ phasenverschoben. Ursache für die Phasenverschiebung ist das induktive Verhalten des Schweißkreises, insbesondere des Sekundärkreises 16 mit den Schweißzangen 17. Die induktive Komponente des Sekundärkreises 16 erreicht in der Praxis vor allem bei Vielpunktanlagen mit gemeinsamem Primärkreis hohe Werte. Dies ist im wesentlichen dadurch bedingt, daß eine Vielpunktanlage eine Parallelschaltung mehrerer, jeweils durch die Sekundärseiten der einzelnen Schweißtransformatoren gegebenen, Induktivitäten ist, deren Gesamtinduktivität der größten vorkommenden Einzelinduktivität entspricht. Der Strom I 31 nimmt einen bei dem Wert I = 0 beginnenden sinusartigen Verlauf. Erreicht die Spannung 30 den Wert Null, wird der leitende Thyristor gesperrt. Zu diesem Zeitpunkt ist der Strom 31 noch nicht abgeklungen. Er eilt der treibenden Spannung 30 nach und erreicht den Wert I = 0 erst nach einem Phasenwinkel ψ. Die Stromnacheilung bewirkt ihrerseits eine Nacheilung der Spannung 30, im folgenden mit Spannungsüberhang 32 bezeichnet. Der Spannungsüberhang ist durch die Zeit bis zum endgültigen Anklingen des Stromes 31 auf den Wert I = 0 gegeben.

In einem ersten Schritt des erfindungsgemäßen Steuerungsverfahrens erfaßt die Steuerung 15 die zeitliche Dauer des Spannungsüberhanges 32. Hierzu wird zu dem Zeitpunkt, zu dem die Spannung 30 den Wert Null passiert, ein Timer T1 gestartet. Der in der Zeichnung nicht dargestellte Timer T1 ist zweckmäßig im Mikrorechner 26 realisiert, er kann aber ebenso als eigenes Bauelement vorhanden sein. In regelmäßigen Anständen ΔT mit beispielsweise ΔT = 50 »sec, wird anschließend der Wert der Spannung 30 erfaßt. Aus je wenigstens zwei aufeinanderfolgenden Meßpunkten ermittelt der Mikrorechner 26 das Steigungsverhalten der Spannung 30. Der Timer T1 wird gestoppt, wenn der Strom I 31 den Wert I = 0 erreicht. Dieser Zustand ist, wie aus Figur 3 zu erkennen, dann gegeben, wenn die Steigung der Spannung 30 unstetig abknickt, wobei sie einen vorgegebenen Spannungs-Grenzwert übersteigt. Um eine zusätzliche Gewißheit zu erhalten, daß eine scharfe Steigungsänderung tatsächlich dem Nulldurchgang des Stromes I 31 entspricht, erfolgt zweckmäßig eine Überprüfung, ob der absolute Wert der Spannung 30 in einem Toleranzband um den Wert U = 0 liegt. Die Grenzen des Toleranzbandes sind vorgebbar. Sind beide Bedingungen, Steigung größer als ein Grenzwert, und absoluter Wert der Spannung 30 nahezu 0, erfüllt, wird der Timer T1 gestoppt. Der dann im Timer befindliche Wert für die Zeitdauer des Spannungsüberhanges 32 wird in den Mikro-Rechner der Schweißsteuerung 10 übernommen.

Die Ermittlung des Steigungsverhaltens der Spannung 30 erfolgt vorteilhaft in der Weise, daß ein Meßwert der Spannung 30 bestimmt wird, zu diesem ein Offset addiert wird, und von dem so erhaltenen Wert der Spannungsmeßwert des vorhergehenden Meßpunktes subtrahiert wird. Die so gewonnene Differenz entspricht der Steigung der Spannung 30 im Zeitintervall Δt zwischen den Meßpunkten. Aufgrund des Betrages des Spannungsüberhanges 32 legt die Steuerung 10 einen minimalen Grenzwert für den Zündwinkel α der nächsten Halbwelle der Spannung 30 fest. Hierzu wird der eine Zeit repräsentierende Wert des Spannungsüberhanges 32 zweckmäßig in die äquivalente Darstellung in Form eines Phasenwinkels umgerechnet. Der berechnete Grenzwert bleibt bis zur Berechnung eines neuen Grenzwertes gespeichert.

Anschließend wird überprüft, ob der Betrag der Phasennacheilung 32 des Stromes größer ist als ein vorgegebener Grenzwert. Als Grenzwert wird in der Regel ein Betrag zwischen 75° und 85° sinnvoll sein. Überschreitet die Phasennacheilung diesen Wert, so wird in der darauffolgenden Phasenwinkelberechnung die Phasennacheilung als Grenzwert verwendet.

Mit dem Zündsignal für die nächste, nach Ermittlung des Phasennacheilung 32 folgende Halbwelle der Spannung 30, wird in einem zweiten Verfahrensschritt zugleich ein Summierglied gestartet. Das Summierglied ist ebenfalls zweckmäßig im Mikrorechner 26 realisiert, kann aber auch als eigenes Bauelement vorgesehen sein. Es bildet aus den vom Analog-Digital-Wandler 25 übermittelten Spannungswerten die Summe. Hierzu erfolgt interruptgesteuert eine periodische Anfrage der Sample/Hold-Stufe 24. Die Interrupts werden in einem zweiten Timer T2 erzeugt. Dieser ist in der Zeichnung ebenfalls nicht dargestellt, ist jedoch zweckmäßig innerhalb des Mikrorechners realisiert. Sie werden periodisch mit einem vorgebbaren Zeitabstand ΔT, der beispielsweise ΔT = 80 usec beträgt, ausgegeben. Die Zahl der Interrupts, und damit die Summationszeit, wird im Timer T2 erfaßt. Summierglied und Timer T2 werden gestoppt, wenn die Spannung 30 den Wert Null erreicht.

Aus der Summe der Spannungswerte innerhalb der Summationszeit wird anschließend im Mikrorechner 27 eine "Spannungs-Zeitfläche" ermittelt. Diese Spannungs-Zeitfläche entspricht der Fläche in einem Spannungs-Zeit-Diagramm, welche durch den zu einer Halbwelle, beginnend mit dem Zündzeitpunkt, gehörendenden Teil der Spannungskurve 30 und der Zeitachse eingeschlossen wird. Die Ermittlung der Spannungs-Zeitfläche erfolgt durch Bildung einer Summe aus den zu einer Summationszeit gehörenden Produkten Meßwertᵢ · ΔT, wenn i Spannungswerte erfaßt wurden. Der Wert der Spannungs-Zeitfläche wird dem Mikrorechner der Schweißsteuerung 10 zugeführt und zur Berechnung des Zündwinkels α für die nächste Halbwelle der Spannung 30 verwendet. Der Zündwinkel α wird so berechnet, daß die Spannungs-Zeitflächen für alle zu einer Schweißzeit gehörenden Halbwellen ein konstanten Wert haben. Hierzu wird der Spannungszeitflächenwert mit einem vorgegebenen Sollwert verglichen. Liegt der Spannungszeitflächenwert über dem vorgegebenen Sollwert, so wird für die nächste Halbwelle ein gegenüber dem vorhergehenden größerer Zündwinkel ausgegeben. Liegt der Spannungsflächenwert unter dem vorgegebenen Sollwert, wird ein kleinerer Zündwinkel α für die nächste Halbwelle ausgegeben. Der berechnete Zündwinkel α sowie der zugehörige Wert der Spannungs-Zeitfläche werden darüberhinaus in einem in der Steuerung 10 angeordneten Speicher abgelegt.

In einem nächsten Verfahrensschritt, welcher sich unmittelbar an die Berechnung des Zündwinkels anschließt, wird der ermittelte Zündwinkel α mit dem aus der Phasennacheilung 32 des Stromes in der vorangegangenen Halbwelle berechneten Grenzwert verglichen. Unterschreitet der Zündwinkel α den im ersten Verfahrensschritt bestimmten minimalen Grenzwert, das heißt, würde er in das Intervall der Phasennacheilung 32 der Spannung fallen, wird er gelöscht. An seiner Stelle wird ein neuer Zündwinkel α ausgegeben, welcher sich durch Addition eines vorgebbaren Betrages zum Wert der Phasennacheilung 32 ergibt. Auf diese Weise wird vermieden, daß der Schweißstrom einem nicht unterbrochenen sinusförmigen Wellenzug entspricht. Der Schweißstrom ist dadurch jederzeit regelbar.

Zweckmäßig ist es, während die Zeitdauer des Überhanges ermittelt wird, periodisch eine Anfrage vorzusehen, welche prüft, ob im Intervall des Überhanges bereits ein Zündungsinterrupt zur Angabe eines Zündimpulses für die nächste Halbwelle erzeugt wurde. Durch diese Anfrage wird ebenfalls geprüft, ob der Strom bzw. die Spannung zwischen zwei Halbwellen einen durchgehende sinusförmigen Verlauf nimmt. Liegt ein Zündungsinterrupt vor, wird die Zeiterfassung abgebrochen und ein Interruptsignal an die Steuerung 10 abgegeben. Die Steuerung 10 bricht daraufhin die Ermittlung der Phasennacheilung 32 des Stromes ab und sperrt den Timer T1. Gleichzeitig unterbindet die Steuerung 10 die Angabe eines Zündimpulses an das Leistungsteil 12 und gibt stattdessen einen Zündimpuls mit einem größtmöglichen Zündwinkel α aus.

Das Verfahren wird zweckmäßig in der Weise realisiert, daß jeweils in einer ersten Halbwelle die Phasennacheilung 32 des Stromes I ermittelt wird, in einer nächsten Halbwelle die Spannungs-Zeitfläche bestimmt wird und in einer übernächsten Halbwelle von der Steuerung 10 der Zündwinkel α für die dieser nachfolgenden Halbwelle berechnet wird, wobei gleichzeitig wiederum der Spannungsüberhang ermittelt wird. Aus je zwei hintereinanderfolgende Halbwellen wird also der Zündwinkel α für die dritte folgende Halbwelle bestimmt. Als Zündwinkel für die zwischen zwei Zündwinkelberechnungen liegenden Spannungshalbwellen wird, wenn die Phasennacheilung 32 keine Grenzbedingung verletzt, der jeweils zuletzt berechnete verwendet.

Die Periodizitäten für die Bestimmung der Spannungs-Zeitfläche bzw. des Spannungsüberhanges können jedoch in jeder beliebigen Kombination gewählt werden. So können Spannungs-Zeitfläche und Spannungsüberhang beispielsweise innerhalb einer einzigen Halbwelle bestimmt werden. Die nächste Halbwelle könnte jeweils zur Berechnung des Zündwinkels α für die übernächste Halbwelle verwendet werden. Ebenso ist denkbar, die Zündwinkelberechnung in größeren Intervallen, etwa nach jeder zehnten Halbwelle durchzuführen. Ausschlaggebend für die Häufigkeit der Zündwinkelberechnung sind die gewünschte Stromgenauigkeit und die zur Verfügung stehende Rechnerkapazität.

Zweckmäßig ist ferner, in der ersten Halbwelle einer Stromzeit lediglich eine Prüfung vorzusehen, ob überhaupt eine sinnvolle Spannung anliegt. Liegt der Wert der Spannung im Bereich von 0, wird die Stromzeit abgebrochen und eine Fehlermeldung ausgegeben.

## Patentansprüche

1. Verfahren zur Steuerung des Stromes in einer Widerstandsschweißanordnung, wobei die Verstellung des Primärstromes durch Stromventile erfolgt, welche von einer Steuerungseinheit (15) in Form einer Phasenanschnittsteuerung ansteuerbar sind, und wobei die Phasennacheilung (32) des im Primärkreis fließenden Stromes (31) gegen die Primärspannung (30) bestimmt wird, gekennzeichnet durch folgende Verfahrensschritte:
a) Bestimmen einer Spannungs-Zeitfläche zu einer Halbwelle der Primärspannung (30), indem diejenige Fläche ermittelt wird, welche in einer Darstellung der Primärspannung (30) in einem Spannungs-Zeit-Diagramm durch den zu einer Halbwelle gehörenden Verlauf der Primärspannung (30), beginnend mit dem dem Phasenanschnittwinkel (α) entsprechenden Zeitpunkt und endend mit dem Nulldurchgang der Primärspannung (30) und durch die Null-Linie der Primärspannung (30) eingeschlossen ist,
b) Ermitteln eines Phasenanschnittwinkels α für die nachfolgende Halbwelle(-n), aufgrund des für die Spannungs-Zeitfläche ermittelten Wertes,
c) Vergleichen des für die Phasennacheilung (32) ermittelten Wertes mit den für die nachfolgende Halbwelle vorgesehenen Phasenanschnittwinkel (α),
d) Bestätigen des vorgesehenen Phasenanschnittwinkels α, wenn der Wert der Phasennacheiliung (32) kleiner ist, als der vorgesehene Phasenanschnittwinkel (α),
e) Ausgeben eines neuen, von der Phasennacheilung (32) abhängigen Phasenanschnittwinkels, wenn die Phasennacheilung (32) größer ist als der vorgesehene Phasenanschnittwinkel (α).

2. Verfahren nach Anpsurch 1, dadurch gekennzeichnet, daß der Phasenanschnittwinkel (α) so berechnet wird, daß die Spannungs-Zeitfläche für jede Halbwelle einen im wesentlichen konstanten Wert besitzt.

3. Verfahren nach Anspruch 1, dadurch gekennzeichnet, daß während der Bestimmung des Phasenüberhanges (32) periodisch eine Abfrage erfolgt, ob in der Steuerung (15) ein Zündinterrupt zur Ausgabe eines Zündimpulses an das Leistungsteil (12) erzeugt wurde.

4. Verfahren nach Anspruch 1, dadurch gekennzeichnet, daß in einer ersten Halbwelle der Primärkreisspannung (30) die Spannungs-Zeitfläche und die Phasennacheilung (32) des Stromes bestimmt werden, und während der nächsten Halbwelle der Phasenanschnittwinkel (α) für die übernächste Halbwelle berechnet wird, in der dann wieder die Spannungs-Zeitfläche und die Phasennacheilung (32) bestimmt werden.

5. Verfahren nach Anspruch 1, dadurch gekennzeichnet, daß die Messung der Phasenverschiebung (32) zwischen Primärspannung (30) und Primärstrom (31) zu einem Zeitpunkt begonnen wird, zu dem die Primärspannung (30) den Wert Null erreicht.

6. Verfahren nach Anspruch 1, dadurch gekennzeichnet, daß die Messung der Phasenverschiebung (32) zwischen Primärstrom (31) und Primärspannung (30) abgeschlossen wird, wenn die zeitliche Änderung der Primärkeisspannung (30) größer wird als ein Grenzwert, welcher vorgebbar ist.

7. Verfahren nach einem der vorhergehenden Ansprüche, dadurch gekennzeichnet, daß die Messung des Phasenüberhanges (32) als eine Zeitmessung, beginnend mit dem Nulldurchgang der Primärspannung (30) und endend mit dem Nulldurchgang des Primärstromes (31) durchgeführt wird.

## Claims

1. Method for controlling the current in a resistance welding arrangement, the primary current being adjusted by means of current valves which can be driven by a control unit (15) in the form of a phase-gating controller, and the phase lag (32) of the current (31) flowing in the primary circuit with respect to the primary voltage (30) being determined, characterized by the following method steps:
a) determination of a voltage-time integral for one half-cycle of the primary voltage (30) in that that integral is determined which is enclosed in a representation of the primary voltage (30) in a voltage-time graph by the course of the primary voltage (30) associated with one half-cycle, starting with the point in time corresponding to the phase-gating angle (α) and ending with the zero crossover of the primary voltage (30), and by the zero line of the primary voltage (30),
b) determination of a phase-gating angle (α) for the subsequent half-cycle(s), on the basis of the value determined for the voltage-time integral,
c) comparison of the value determined for the phase lag (32) with the phase-gating angle (α) provided for the subsequent half-cycle,
d) confirmation of the intended phase-gating angle (α) when the value of the phase lag (32) is less than the intended phase-gating angle (α),
e) outputting a new phase-gating angle, which is dependent on the phase lag (32), when the phase lag (32) is greater than the intended phase-gating angle (α).

2. Method according to Claim 1, characterized in that the phase-gating angle (α) is calculated such that the voltage-time integral has an essentially constant value for each half-cycle.

3. Method according to Claim 1, characterized in that an interrogation is carried out periodically during the determination of the phase overhang (32), to determine whether a trigger interrupt, in order to output a trigger pulse to the power section (12), has been produced in the controller (15).

4. Method according to Claim 1, characterized in that the voltage-time integral and the phase lag (32) of the current are determined in a first half-cycle of the primary circuit voltage (30), and the phase-gating angle (α) for the next but one half-cycle, in which the voltage-time integral and the phase lag (32) are then determined again, is calculated during the next half-cycle.

5. Method according to Claim 1, characterized in that the measurement of the phase shift (32) between the primary voltage (30) and the primary current (31) is started at a point in time at which the primary voltage (30) reaches the value zero.

6. Method according to Claim 1, characterized in that the measurement of the phase shift (32) between the primary current (31) and the primary voltage (30) is terminated when the change in the primary circuit voltage (30) with respect to time becomes greater than a limiting value, which can be predetermined.

7. Method according to one of the preceding claims, characterized in that the measurement of the phase overhang (32) is carried out as a time measurement, starting with the zero crossover of the primary voltage (30) and ending with the zero line of the primary current (31).

## Revendications

1. Procédé de commande du courant d'un dispositif de soudage par résistance, le réglage du courant primaire se faisant par soupapes de courant qui sont commandées par une unité de commande (15) sous la forme d'une commande de découpage de phase, procédé selon lequel on détermine le retard de phase (32) du courant (31) du circuit primaire par rapport à la tension de phase (30), procédé caractérisé par les étapes suivantes :
(a) on détermine une surface tension/temps de la tension primaire (30) d'une demi-onde en déterminant la surface comprise dans une représentation de la tension primaire (30) selon un diagramme tension/temps entre la courbe de la demi-onde de la tension primaire (30) commençant par l'instant de l'angle de découpe de phase (α) et se terminant par le passage par zéro de la tension primaire (30) et par l'axe des zéros de la tension primaire (30),
(b) on détermine l'angle de découpage de phase (α) pour la ou les demi-onde(s) (-n) suivante(s) à partir de la valeur obtenue pour la surface tension/temps,
(c) on compare la valeur obtenue pour le retard de phase (32) à l'angle de découpage de phase (α) prévu pour la demi-onde suivante,
(d) on confirme l'angle de découpage de phase α prévu lorsque la valeur du retard de phase (32) est inférieure à l'angle de découpage de phase (α) prévu,
(e) on émet un nouvel angle de découpage de phase dépendant du retard de phase (32) si ce retard de phase (32) est supérieur à un angle de découpage de phase (α) prévu.

2. Procédé selon la revendication 1, caractérisé en ce qu'on calcule l'angle de découpage de phase α pour que la surface tension/temps pour chaque demi-onde possède une valeur essentiellement constante.

3. Procédé selon la revendication 1, caractérisé en ce que pendant la détermination du dépassement de phase (32) on fait périodiquement une interrogation pour savoir si la commande (15) a créé une interruption d'allumage pour émettre une impulsion d'allumage à la partie de puissance (12).

4. Procédé selon la revendication 1, caractérisé en ce que dans une première demi-onde de la tension du circuit primaire (30) on détermine la surface tension/temps et le retard de phase (32) du courant et pendant la demi-onde suivante, on calcule l'angle de découpage de phase (α) pour la seconde demi-onde suivante au cours de laquelle on détermine de nouveau la surface tension/temps et le retard de phase (32).

5. Procédé selon la revendication 1, caractérisé en ce qu'on commence la mesure du déphasage (32) entre la tension primaire (30) et le courant primaire (31) à l'instant auquel la tension primaire (30) est nulle.

6. Procédé selon la revendication 1, caractérisé en ce qu'on termine la mesure du déphasage (32) entre le courant primaire (31) et la tension primaire (30) lorsque la variation dans le temps de la tension du circuit primaire est supérieure à une valeur limite prédéterminée.

7. Procédé selon l'une des revendications précédentes, caractérisé en ce qu'on effectue la mesure du dépassement de phase (32) comme mesure de temps commençant par le passage par zéro de la tension (30) du circuit primaire et se terminant par le passage par zéro de l'intensité du courant primaire (31)
